(19) Europäisches Patentamt

European Patent Office

Office européen des brevets

(11) Veröffentlichungsnummer: **0 291 876 B1**

(12) **EUROPÄISCHE PATENTSCHRIFT**

(45) Veröffentlichungstag der Patentschrift: **04.03.92**

(21) Anmeldenummer: **88107716.8**

(22) Anmeldetag: **13.05.88**

(51) Int. Cl.⁵: **B67D  5/01**, B64F 1/28

(54) **Betankungsanlage, inbesondere für die Betankung von Flugzeugen mit hochliegenden Tragflächen.**

(30) Priorität: **20.05.87 DE 3716867**

(43) Veröffentlichungstag der Anmeldung:
**23.11.88 Patentblatt  88/47**

(45) Bekanntmachung des Hinweises auf die
Patenterteilung:
**04.03.92 Patentblatt  92/10**

(84) Benannte Vertragsstaaten:
**BE DE FR GB IT NL**

(56) Entgegenhaltungen:
**EP-A- 0 166 799**
**EP-A- 0 167 642**

(73) Patentinhaber: **von Meyerinck, Wolfgang,
Dipl.-Ing.
Daubringer Strasse 43
W-6304 Lollar(DE)**

Patentinhaber: **R.H. von Meyerinck GmbH
Pfarrgarten 6
W-6300 Giessen(DE)**

(72) Erfinder: **von Meyerinck, Wolfgang, Dipl.-Ing.
Daubringer Strasse 43
W-6304 Lollar(DE)**
Erfinder: **R.H. von Meyerinck GmbH
Pfarrgarten 6
W-6300 Giessen(DE)**

(74) Vertreter: **Missling, Arne, Dipl.-Ing.
Patentanwalt Bismarckstrasse 43
W-6300 Giessen(DE)**

## Beschreibung

Die Erfindung betrifft eine Betankungsanlage, insbesondere für die Flugzeugbetankung gemäß dem Oberbegriff des Anspruches 1.

Bei der Betankung von Fahrzeugen, insbesondere von Flugzeugen müssen, insbesondere im militärischen Bereich, größere Treibstoffmengen in kürzester Zeit von einem Hydrantensystem oder einem Tankwagen in den zu befüllenden Tank des Fahrzeuges oder Flugzeuges umgeschlagen werden. Dabei erweisen sich insbesondere die letzten 20 bis 30 m zwischen dem zu befüllenden Tank und dem Betankungswagen bzw. dem Hydrantensystem als besonders problematisch.

Früher wurden zur Befüllung bzw. zur Entleerung von Tanks Schläuche eingesetzt, welche beispielsweise mit einer Stahl- oder Perloneinlage versehen sind und in der Regel Nennweiten von 2,5 bis maximal 3 Zoll haben. Die Handhabung der Schläuche wird umso schwieriger und umständlicher, je größer die Nennweiton und je länger die Schläuche sind. Daraus folgt, daß die Handhabung und der Transport der Schläuche erhebliche Probleme bereiten. Weiterhin sind die Schläuche einem hohen Verschleiß ausgesetzt, da sie zum einen stets über den Boden gezogen werden müssen und beispielsweise bei Aufbewahrung in Betankungsschächten stark beansprucht werden. Ein weiteres Problem der Schläuche besteht in der Druckentlastung, welche infolge des hohen Ausdehnungskoeffizienten von Treibstoff erforderlich ist. Bei einer Volumenzunahme wegen thermischer Einwirkung lassen sich die Schläuche nur schlecht biegen, während sie bei einer Volumenabnahme zusammenfallen und die Bewehrung der Schläuche beschädigt werden kann. Weiterhin stellen die Schläuche bei Verwendung in der Nähe laufender Turbinen oder Motoren, beispielsweise bei der Betankung von Jagdflugzeugen ein erhebliches Sicherheitsrisiko dar und bedürfen zusätzlich einer intensiven Wartungs- und Überprüfungstätigkeit.

Aus der EP-A1-1 16 799, welche den nächstkommenden Stand der Technik bildet, ist ein Betankungssystem bekannt, welches aus miteinander gelenkig verbundenen Rohrabschnitten besteht. Es ist dabei möglich, die einzelnen Rohrabschnitte entsprechend abzustützen und gewichtszuentlasten, so daß die Handhabung vereinfacht wird. Weiterhin unterliegen derartige Rohrsysteme einem weitaus geringeren Verschleiß, so daR sich die Wartungs- und Instandhaltungsarbeiten erheblich vereinfachen.

Als relevanter Stand der Technik sind weiterhin die US-A-2 642 311 und GB-A-4 56 906 zu nennen.

Der Erfindung liegt die Aufgabe zugrunde, eine Betankungsanlage der eingangs genannten Art vorzuschlagen, welche bei einfachem Aufbau und kostengünstiger Herstellbarkeit eine verbesserte und erleichterte Handhabung aufweist und insbesondere bei der Flugzeugbetankung universell einsetzbar ist und beispielsweise bei der Unterflügelbetankung von Flugzeugen mit geringem Kraftaufwand handhabbar ist.

Die Aufgabe wird erfindungsgemäß mit dem Merkmalen des kennzeichnenden Teiles des Hauptanspruches gelöst. Die Unteransprüche zeigen weitere vorteilhafte Ausgestaltungen der Erfindung.

Die mit der Erfindung erzielten Vorteile bestehen im wesentlichen darin, daß die Betankungsanlage mit einer Betankungsspitze und Drehgelenken ausgestattet ist. Sie hat besonders bei Anschlußhöhen von etwa 2,2 m eine hohe Flexibilität hinsichtlich der Einsetzbarkeit. Durch Vorspannung von Federdämpfern einer Federdämpfereinheit ist die Betankungsspitze der Betankungsanlage so ausbalanciert, daß diese immer die maximale Auslenkung einnehmen kann. Die Handhabung ist beim Betanken im höchstmöglichen Bereich, d.h. bei einer Höhe von etwa 4,7 m, mit geringem Kraftaufwand möglich, weil nur das Gewicht der obersten Spitze der aus drei Gelenken bestehenden Kombination gehalten und bewegt werden muß. Abgesehen davon, daß erfindungsgemäß die Nachteile, die bei der Verwendung von Schläuchen auftreten, vermieden werden, ist weiterhin sichergestellt, daß praktisch keine Kräfte oder Belastungen auf die Kupplung am Fahrzeug oder Flugzeug übertragen werden, da jede horizontale oder vertikale Bewegung einer Betankungskupplung in eine Drehbewegung umgewandelt werden kann. Die erfindungsgemäße Betankungsanlage kann universell für Betankungshöhen von etwa 0,8 m (Tankwagen) bis zu einer Höhe von 4,7 m eingesetzt werden und eignet sich somit auch für die Unterflügelbetankung großer Flugzeuge, beispielsweise der Typen DC 10, B 747 oder A 300.

Ein Ausführungsbeispiel der Erfindung ist in der Zeichnung dargestellt und wird im folgenden näher erläutert. Es zeigen

Fig. 1      eine Vorderansicht der erfindungsgemäßen Betankungsanlage mit der Betankungsspitze in Hochstellung bei hochgefahrenem Führungswagen für Unterflügelbetankung;

Fig. 2      eine Draufsicht auf die in Fig. 1 gezeigte erfindungsgemäße Betankungsanlage;

Fig. 3      eine Seitenansicht der erfindungsgemäßen Betankungsanlage, in der ihre Betankungsspitze nach unten geschwenkt ist und in der der Führungswagen seine Tiefstellung einnimmt und

Fig. 4      eine Seitenansicht der erfindungsgemäßen Betankungsanlage mit der Betankungsspitze in höchster Stellung, die nach maximalem Aufwärtsschwenken der Betankungsspitze und Drehen der Betankungskupplung mittels einer Gelenkkombination erreichbar ist, wobei sich der Führungswagen in Hochstellung befindet.

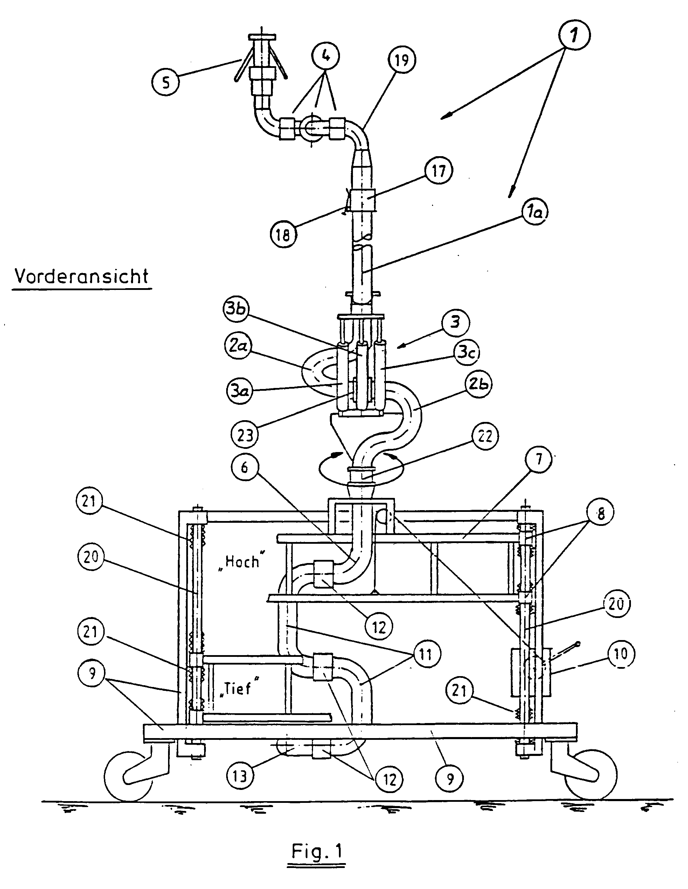

Fig. 1 zeigt in einer Vorderansicht die erfindungsgemäße Betankungsanlage mit einer Betankungsspitze 1, die universell für Betankungshöhen von etwa 0,8 m (Tankwagen) bis zu 4,7 m Höhe verwendbar ist. Bei der erreichbaren Hochstellung der Betankungsspitze von 4,7 m, wie dargestellt, eignet sie sich insbesondere für Unterflügelbetankung von Flugzeugen vom Typ DC 10, B 747 und A 300.

Die Betankungsspitze 1 besteht aus einem Rohrabschnitt 1a, an dem ein arretierbares Drehgelenk 17 und ein Rohrbogen 19 angeordnet sind, welcher, wenn eine am arretierbaren Drehgelenk 17 angebrachte automatische Arretierung 18 gelöst wird, um 180° zur Achse des Rohrabschnittes 1a der Betankungsspitze 1 schwenkbar ist. Die Arretierung 18 rastet unmittelbar nach dem Schwenken wieder ein. Durch diese spezielle Ausgestaltung der Erfindung ergibt sich eine hohe Flexibilität der Betankungsspitze 1, und zwar besonders im Bereich von Anschlußhöhen bis zu etwa 2,2m.

Die Betankungsspitze 1 besteht ferner aus einer an den Rohrbogen 19 sich anschließenden und drei Gelenke umfassenden Kombination 4, mit der eine bekannte Betankungskupplung 5 bewegbar und in der Höhe in allen drei Freiheitsgraden verstellbar ist. Da hier jede horizontale oder vertikale Bewegung der Betankungskupplung 5 in eine Drehbewegung der aus drei Gelenken bestehenden Kombination 4 umwandelbar ist, werden praktisch keine Kräfte oder Belastungen auf die Anschlußkupplung übertragen, zumal Federdämpfer (3) das Gewicht weitgehend kompensieren.

Die Betankungsspitze 1 hat erste und zweite aus einem Rohr bestehende Rohrbögen 2a,2b, wobei am ersten Rohrbogen 2a und am Ende des Rohrabschnittes 1a eine aus drei Federdämpfern 3a, 3b und 3c bestehende Federdämpfereinheit 3 befestigt ist, welche die Verstellkräfte bei Auf- und Abschwenken auf ein Minimum begrenzt.

Am Rohrbogen 2b ist ein Krümmer 6 vorgesehen, mit dem die Betankungsspitze 1 an einem Führungswagen 7 befestigt ist. Der Führungswagen 7, der in hochgenauen Linearlagern 8 auf zwei Führungswellen 20 eines Radträgers 10 läuft, kann durch Drehen einer selbsthemmenden Seilwinde 10 aufwärts in eine Hochstellung bzw. durch das Eigengewicht der Betankungsspitze 1 abwärts in Tiefstellung, hier nicht gezeigt, bewegt werden. Da die Seilwinde 10 selbsthemmend ist, kann der Führungswagen 7 in jeder Stellung festgehalten werden. Zum Betanken sollten jedoch nur die Hoch- und Tiefstellungen benutzt werden.

Wie die Fig. 1 durch einen Pfeilring am Ende des Rohrbogens 2b zeigt, ist die Betankungsspitze 1 mit einem über dem Rohrbogen 6 angeordneten Drehgelenk 22 horizontal um 360° drehbar und kann damit in alle gewünschte horizontale Betankungsrichtungen gebracht werden.

Am Rohrbogen 2a ist gegenüber dem Federdämpfer 3b der Federdämpfereinheit 3 ein weiteres Drehgelenk 23 vorgesehen, mit dem die Betankungsspitze 1 aus der horizontalen Lage um - 10° bis zu + 70° schwenkbar ist, um, wie noch zu zeigen ist, verschiedene Höhenpositionen beim Betanken einzunehmen. Bei der in Fig. 1 dargestellten Höhenposition ist die Betankungsspitze mit Hilfe des Drehgelenkes 23 in Hochposition geschwenkt und erreicht hier eine Betankungshöhe von etwa 4,7 m, die sich, wie bereits ausgeführt, insbesondere für die Unterflügelbetankung von Flugzeugen vom Typ DC 10, B 747 und A 300 eignet. Der Führungswagen 7 nimmt dabei die in Fig. 1 mit "Hoch" gekennzeichnete Position ein. Wenn der Führungswagen 7 längs der Führungswelle 20 dagegen nach unten gefahren wird, so erreicht er die mit "Tief" dargestellte Stellung, die noch näher zu erläutern ist.

Die Betankungsspitze 1 der erfindungsgemäßen Betankungsanlage ist durch eine drei Gelenke 12 aufweisende bewegliche Rohrschere 11 mit einem letzten Rohrabschnitt 13 verbunden, der mit dem Radträger 9 fest verschraubt ist. An den Rohrabschnitt 13 kann ein bekannter Betankungsarm (nicht gezeigt) angeflanscht werden, um eine ebenfalls nicht dargestellte Hydrantenkupplung für den Anschluß an Versorgungsleitungen aufzunehmen.

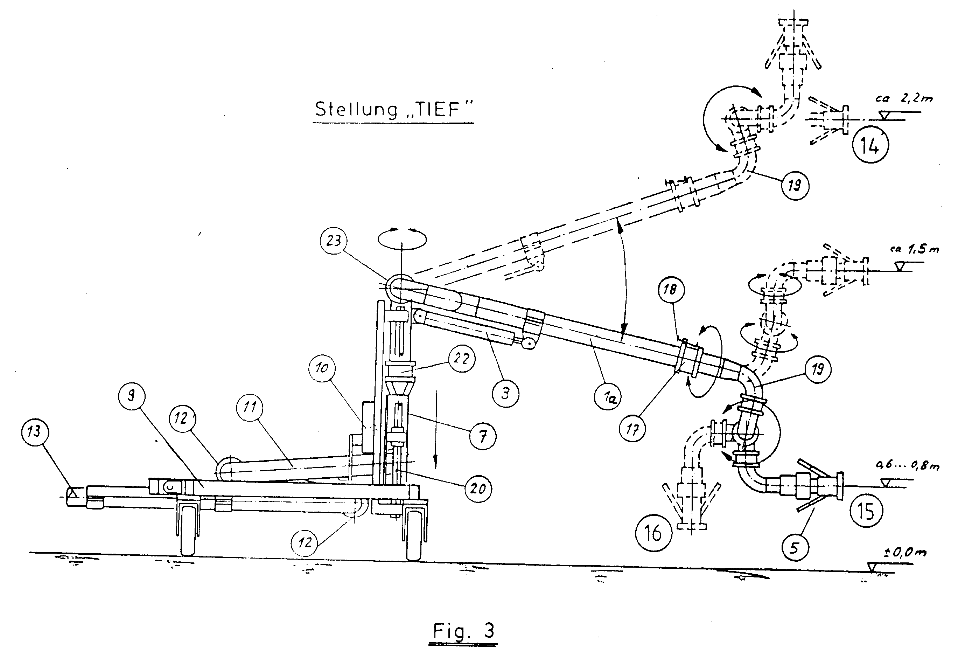

Gemäß einer Ausführungsform der Erfindung ist die Betankungsspitze 1 aus der horizontalen Lage durch das Drehgelenk 23 um - 10° bis zu + 70° schwenkbar, so daß die maximale Hochstellung von 4,7 m oder die Tiefstellungen 14, 15, 16 (Fig. 3) erreichbar sind. Bei der maximalen Hochstellung wird erfindungsgemäß eine Höhe von 4,7 m und bei den Tiefstellungen 14, 15 solche zwischen 0,6 und 2,2 m erreicht. Dadurch, daß mit der aus den drei Gelenken bestehenden Kombination 4 die Betankungskupplung 5 in allen drei Freiheitsgraden beweg- und verstellbar ist, kann bei einer eingestellten Schwenkposition der Betankungsspitze 1, wie noch zu erläutern ist, die Stellung der Betankungskupplung 5 zwecks Höhenanpassung noch verändert werden (z.B. Fig. 3).

Der Führungswagen 7 ist bevorzugt so ausgebildet, daß er durch die selbsthemmende Seilwinde 10 an sich in jeder Lage zwischen den erreichbaren Hoch- und Tiefstellungen 14, 15 abbremsbar ist.

Die Führungswellen 20 zum Bewegen des Führungswagens 7 sind seitlich vom Radträger 9 angebracht, so daß ausreichend Platz für die Rohrschere 11 im zentralen Bereich des Radträgers 9 vorhanden ist, und weisen Faltenbälge 21 gegen Verschmutzung auf.

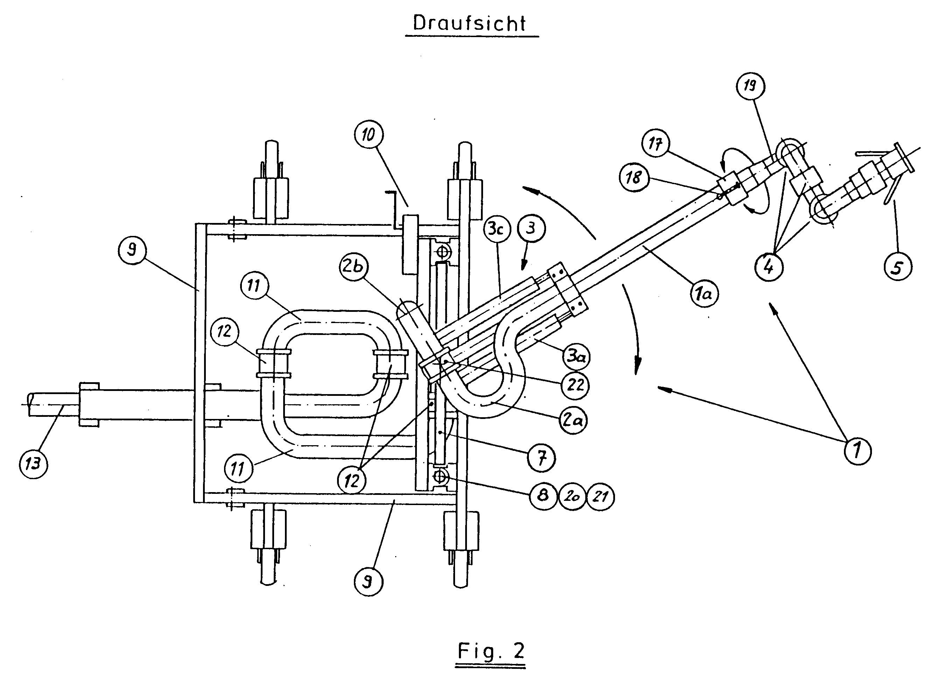

Fig. 2 zeigt eine Draufsicht auf die in Fig. 1 dargestellte erfindungsgemäße Betankungsanlage mit der um das Drehgelenk 22 horizontal verdrehbaren Betankungsspitze 1 und mit dem Führungswagen 7 in Hochstellung. Die Betankungskupplung 5 ist mit Hilfe der aus den drei Gelenken bestehenden Kombination 4 parallel zur Betankungsspitze 1 verstellbar, was erfolgen kann, wenn der Rohrbogen 19 nach Lösen der am arretierbaren Drehgelenk 17 angebrachten automatischen Arretierung 18 um 180° zur Achse des Rohrabschnittes 1a der Betankungsspitze 1 verschwenkt wird und wenn die Arretierung 18 wieder eingerastet ist.

Die Gelenke 12 der Rohrschere 11 sind deutlich in der Draufsicht gezeigt. Am Rohrabschnitt 1a der Betankungsspitze 1 sind zwei Federdämpfer 3a und 3b der Federdämpfereinheit 3 dargestellt. Die Federdämpfereinheit 3, bestehend aus insgesamt drei Federdämpfern 3a, 3b und 3c, sorgt mit ihrer Vorspannung dafür, daß die Betankungsspitze 1 so ausbalanciert ist, daß sie möglichst in allen Lagen, zumindest jedoch um ihre Mittellage herum, stehen bleibt und somit überall mit geringem Kraftaufwand bewegbar ist, da im wesentlichen nur das Gewicht der obersten Spitze mit den drei Gelenken der Kombination 4 gehalten und bewegt werden muß.

Fig. 3 zeigt eine Seitenansicht der erfindungsgemäßen Betankungsanlage, in der ihre Betankungsspitze 1 aus der Position 14 mit einer Höhe von etwa 2,2 m durch Betätigen des Drehgelenkes 23 bis zu - 10° in eine Position 15 nach unten geschwenkt ist, wobei sich der Führungswagen 7 in seiner untersten Stellung befindet. Bei der Höhe von 2,2 m (Position 14) kann die Betankung an Flugzeuganschlüssen vorgenommen werden, wobei die Position der Betankungskupplung 5 noch in gewünschte Richtungen veränderlich ist. Bei einer Position von 0,8 m Höhe (Position 15) ist ein Tankwagen zur Betankung sowie ein Anschluß an eine Rückspülleitung auf Erdbodenniveau (Position 16) erreichbar. Durch Schwenken des Rohrbogens 19 um 180° nach oben kann bei konstant gehaltener Schwenkstellung der Betankungsspitze 1 eine Höhe von etwa 1,5 m für einen weiteren Betankungszweck erreicht werden.

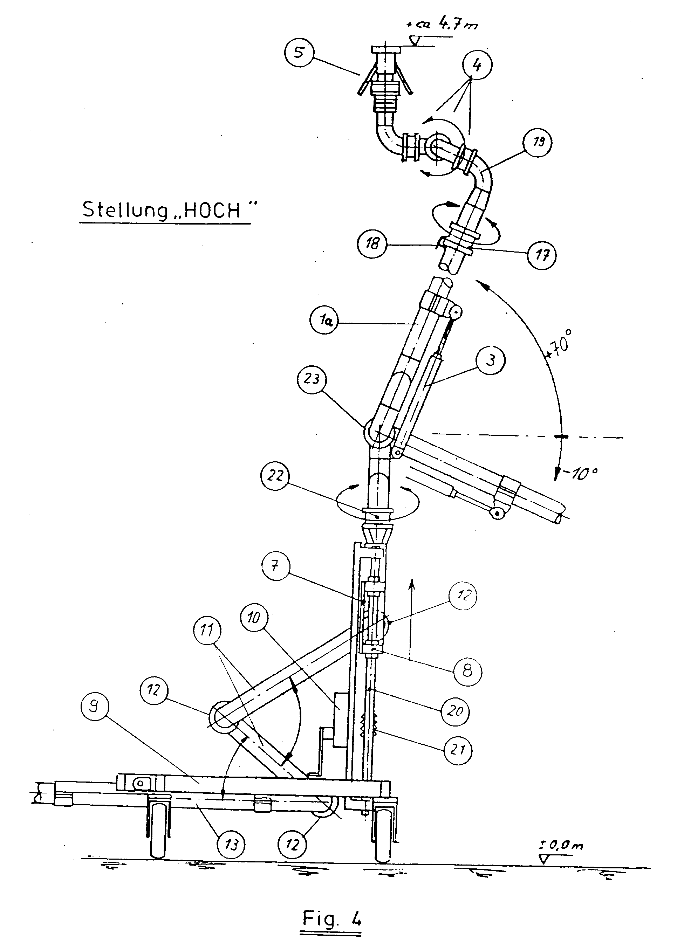

Fig. 4 zeigt eine Seitenansicht der erfindungsgemäßen Betankungsanlage mit maximal möglicher Ausschwenkung der Betankungsspitze 1 um das Drehgelenk 23 bis zu + 70°, wobei sich der Führungswagen 7, der mit der Seilwinde 10 in die oberste Position hochgefahren ist, in der Stellung "Hoch" befindet. Auch hier ist die Vorspannung der Federdämpfer 3a, 3b und 3c der Federdämpfereinheit 3 so ausbalanciert, daß sie immer die maximale Auslenkung einnimmt. In der hier dargestellten höchsten Stellung sind Betankunganschlüsse bis zu etwa 4,7 m erreichbar und damit zur Unterflügelbetankung, insbesondere für die Flugzeugtypen DC 10, B 747 und A 300 geeignet.

**Patentansprüche**

1. Betankungsanlage mit durch Drehgelenke miteinander verbundenen und von Wagen oder Rädern getragenen Rohrabschnitten, wobei an einem der Rohrabschnitte Mittel zum Anschluß an Versorgungsleitungen und an dem anderen der Rohrabschnitte ein Enddrehgelenk mit einem Kopfstück und einer Betankungskupplung (5) vorgesehen ist, die zum Anschließen an den zu betankenden bzw. zu entleerenden Tank, insbesondere der Flugzeugbetankung dient, wobei das Kopfstück als Betankungsspitze (1) ausgebildet ist, welche einen Rohrbogen (19) und eine an den Rohrbogen (19) sich anschließende und aus drei Gelenken bestehende Kombination (4) zum Bewegen und Verstellen der Betankungskupplung (5) in allen drei Freiheitsgraden aufweist, wobei die Betankungsspitze (1) erste und zweite Rohrbögen (2a,2b) umfaßt, wobei am ersten Rohrbogen (2a) und am Ende eines Rohrabschnittes (1a) eine aus mehreren Federdämpfern (3a,3b,3c) bestehende Federdämpfereinheit (3) befestigt ist, welche das Gewicht der Betankungsspitze kompensiert und die Verstellkräfte beim Auf- und Abschwenken auf ein Minimum begrenzt, am Rohrbogen (2a) gegenüber der Federdämpfereinheit (3) ein Drehgelenk (23) vorgesehen ist, mit dem die Betankungsspitze (1) aus der horizontalen Lage schwenkbar ist, um beim Betanken eine maximale Hochstellung oder Tiefstellung (14,15) einzunehmen, und wobei am Rohrbogen (2b) ein Krümmer (6) vorgesehen ist, mit dem die Betankungsspitze (1) an einem Führungswagen (7) befestigt ist und über dem Führungswagen (7) ein Drehgelenk (22) angeordnet ist, mit Hilfe dessen die Betankungsspitze (1) horizontal um 360° drehbar ist, dadurch gekennzeichnet, daß die Betankungsspitze anschließend an den Rohrbogen (19) ein arretierbares Drehgelenk (17) aufweist, wobei der Rohrbogen (19) nach Lösen einer am arretierbaren Drehgelenk (17) angebrachten automatischen Arretierung (18) um 180° zur Achse des Rohrabschnittes (1a) der Betankungsspitze (1) schwenkbar ist, wonach die Arretierung (18) wieder einrastet, daß der Führungswagen (7) der in Linearlagern (8) auf zwei Führungswellen (20) eines Radträgers (9) läuft, durch Drehen einer selbsthemmenden Seilwinde (10) aufwärts bzw. abwärts bewegbar ist, und daß die Betankungsspitze (1) durch eine drei Gelenke (12) aufweisende bewegliche Rohrschere (11) mit einem letzten Rohrabschnitt (13) verbunden ist, welcher an dem Radträger (9) verschraubt ist.

2. Betankungsanlage nach Anspruch 1, dadurch gekennzeichnet, daß die Betankungsspitze (1) durch das Drehgelenk (23) aus der horizontalen Lage um - 10˚ bis zu + 70˚ schwenkbar ist, so daß die Hochstellung oder die Tiefstellungen (14, 15) erreichbar sind.

3. Betankungsanlage nach Anspruch 1 und 2, dadurch gekennzeichnet, daß die Betankungsspitze (1) bei Tiefstellung Höhenlagen zwischen 0,6 und 2,2 m für horizontalen Anschluß und bei Hochstellung eine solche von etwa 4,7 m für vertikalen Anschluß einnimmt.

4. Betankungsanlage nach einem der Ansprüche 1 bis 3, dadurch gekennzeichnet, daß bei einer Höhe von etwa 2,20 m (Position 14) Flugzeuganschlüsse betankbar sind.

5. Betankungsanlage nach einem der Ansprüche 1 bis 3, dadurch gekennzeichnet, daß ab 0,8 m Höhe (Position 15) Tankwagen zur Betankung sowie zum Anschluß an eine Rückspülleitung auf Erdboden-Niveau (Position 16) erreichbar sind.

6. Betankungsanlage nach Anspruch 1, dadurch gekennzeichnet, daß der Führungswagen (7) durch die selbsthemmende Seilwinde (10) in jeder Lage zwischen den erreichbaren Hoch- und Tiefstellungen (14, 15) abbremsbar ist.und somit jede Zwischenstellung zwischen 2,20 und 4,70 m für Betankungsanschlüsse gehalten werden kann.

7. Betankungsanlage nach Anspruch 1, dadurch gekennzeichnet, daß die Führungswellen (20) zum Bewegen des Führungswagens (7) seitlich am Radträger (9) angebracht und mit Faltenbälgen (21) gegen Verschmutzung geschützt sind.

**Claims**

1. Fuelling installation with pipe sections connected to one another by swivel joints and carried by trucks or wheels, one of the pipe sections being provided with means for the connection to supply pipes and the other of the pipe sections being provided with a terminal swivel joint having a headpiece and a fuelling coupling (5), which serves for the connection to the tank to be filled with fuel, or emptied, more especially the fuelling of aircraft, the headpiece being constructed as a fuelling nozzle (1), which comprises a pipe bend (19) and a combination (4) following the pipe bend (19) and consisting of three joints for the movement and adjustment of the fuelling coupling (5) in all three degrees of freedom, the fuelling point or nozzle (1) comprising first and second pipe bends (2a, 2b), the first pipe bend (2a) and the end of a pipe section (1a) having fixed thereon a spring damper unit (3) which consists of a plurality of spring dampers (3a,3b,3c) and which compensates for the weight of the fuelling nozzle and limits to a minimum the adjustment forces during the upward and downward swinging movement, the pipe bend (2a) is provided, opposite the spring damper unit (3), with a hinge or turning knuckle (23), with which the fuelling nozzle (1) is swivellable from the horizontal position in order, during the fuelling, to assume a maximum high position or low position (14, 15), and the pipe bend (2a) is provided with an elbow member (6) with which the fuelling point or nozzle (1) is fixed on a guide wagon (7) and the guide wagon (7) has arranged above it a turning knuckle (22), with the aid of which the fuelling nozzle (1) can be rotated horizontally through 360˚, characterised in that the fuelling nozzle, following the pipe bend (19), comprises a closable hinge (17), the pipe bend (19), after freeing an automatic stop means (18) arranged on the closable hinge (17), being swivellable through 180˚ about the axis of the pipe section (1a) of the fuelling nozzle (1), whereafter the stop means (18) re-engage, that the guide wagon (7), which runs in linear bearings (8) on two guide shafts (20) of a wheel support (9), is movable upwardly and downwardly by rotation of a self-locking cable winch (10), and that the fuelling nozzle (1) is connected by a movable pipe shears (11) having three joints (12) to a last pipe section (13), which is screwed on the wheel support (9).

2. Fuelling installation according to claim 1, characterised in that the fuelling nozzle (1) is swivellable by the hinge (23) from the horizontal position by -10˚ up to +70˚, so that the high position or the low positions (14, 15) can be reached.

3. Fuelling installation according to claims 1 and 2, characterised in that the fuelling nozzle (1), in the low position, assumes height positions between 0.6 and 2.2 m. for horizontal connection and, in the high position, assumes a position of about 4.7 m. for vertical connection.

4. Fuelling installation according to one of the claims 1 to 3, characterised in that aircraft connections can be fuelled at a height of about 2.20 m. (position 14).

5. Fuelling installation according to one of the claims 1 to 3, characterised in that, from a height of 0.8 m ((position 15) tankers for fuelling and also for connection to a reverse flow line at ground level (position 16) can be reached.

6. Fuelling installation according to claim 1, characterised in that the guiding wagon (7) can be braked by the self-locking cable winch (10) in any position between the reachable high and low positions (14, 15) and thus each intermediate position between 2.20 and 4.70 m can be maintained for fuelling connections.

7. Fuelling installation according to claim 1, characterised in that the guide shafts (20) for the movement of the guiding wagon (7) are arranged laterally on the wheel support (9) and are protected with bellows (21) against being soiled.

**Revendications**

1. Installation de remplissage de cuve comportant des éléments de tube réunis entre eux par des articulations tournantes et portés par des chariots ou des roues,

dans laquelle, sur l'un des éléments de tube, il est prévu des moyens de raccordement à des canalisations d'alimentation et, sur l'autre des éléments de tube, il est prévu une articulation tournante terminale comportant un élément de tête et un accouplement de remplissage (5), qui est destiné à être raccordé à la cuve qui doit être remplie ou vidée, notamment pour faire le plein d'un avion,

dans laquelle l'élément de tête est réalisée sous la forme d'une lance de remplissage (1) qui possède un coude tubulaire (19) et une combinaison (4) destinée à être raccordée au coude tubulaire (19) et constituée par trois articulations pour le déplacement et le réglage de l'accouplement de remplissage (5) suivant les trois degrés de liberté,

dans laquelle la lance de remplissage (1) comprend des premier et second coudes tubulaire (2a, 2b),

dans laquelle, sur le premier coude tubulaire (2a) et à l'extrémité d'un élément de tube (1a), est fixée une unité d'amortissement à ressorts (3), qui est constituée par plusieurs amortisseurs à ressorts (3a, 3b, 3c) et compense le poids de la lance de remplissage et limite au minimum les forces de déplacement lors du soulèvement et de l'abaissement,

dans laquelle il est prévu, au niveau du coude tubulaire (2a), à l'opposé de l'unité d'amortissement à ressorts (3), une articulation tournante (23), au moyen de laquelle la lance de remplissage (1) peut pivoter à partir de la position horizontale pour passer, lors du remplissage, à une position élevée maximale ou à une position basse maximale (14, 15),

et dans laquelle sur le coude tubulaire (2b) il est prévu un raccord coudé (6), au moyen duquel la lance de remplissage (1) est fixée à un chariot de guidage (7), tandis qu'au-dessus du chariot de guidage (7) est disposée une articulation tournante (22), à l'aide de laquelle la lance de remplissage (1) peut pivoter horizontalement sur 360˚,

caractérisée en ce que la lance de remplissage possède, à la suite du coude tubulaire (19), une articulation tournante (17) blocable, le coude tubulaire (19) pouvant être basculé sur 180˚ autour de l'axe de l'élément tubulaire (1a) de la lance de remplissage (1), après desserrage d'un dispositif de blocage automatique (18) monté sur l'articulation tournante (17) blocable, à la suite de quoi le dispositif de blocage (18) est à nouveau encliqueté,

en ce que le chariot de guidage (7), qui circule dans des paliers linéaires (8) sur deux arbres de guidage (20) d'un support roulant (9), peut être soulevé et abaissé par rotation d'un treuil auto-bloquant (10),

et en ce que la lance de remplissage (1) est raccordée, par un tube en S mobile (11) comportant trois articulations (12), à un dernier élément de tube (13), qui est fixé par vissage au support roulant (9).

2. Installation de remplissage selon la revendication 1, caractérisée en ce que la lance de remplissage (1) peut basculer de -10˚ jusqu'à +70˚ autour de la position horizontale grâce à la présence de l'articulation tournante (23), ce qui permet d'atteindre la position haute ou les positions basses (14, 15).

3. Installation de remplissage selon les revendications 1 et 2, caractérisée en ce que, dans la position basse, la lance de remplissage (1) prend des positions en hauteur comprises entre 0,6 et 2,2 m pour le raccordement horizontal et, dans la position haute, une position en hauteur d'environ 4,7 m pour le raccordement vertical.

4.  Installation de remplissage suivant l'une des revendications 1 à 3, caractérisée par le fait que, pour une hauteur d'environ 2,20 m (position 14), on peut remplir des raccords de remplissage d'avions.

5.  Installation de remplissage suivant l'une des revendications 1 à 3, caractérisée par le fait qu'à partir d'une hauteur de 0,8 m (position 15), on peut atteindre des citernes pour le remplissage ainsi que pour le raccordement à un conduit de renvoi au niveau du sol (position 16).

6.  Installation de remplissage selon la revendication 1, caractérisée en ce que le chariot de guidage (7) peut être freiné au moyen du treuil autobloquant (10) dans n'importe quelle position entre les positions haute et basse (14, 15), qui peuvent être atteintes, et que par conséquent chaque position intermédiaire entre 2,20 et 70 m pour des raccords de remplissage peut être maintenue.

7.  Installation de remplissage selon la revendication 1, caractérisée en ce que des arbres de guidage (20) pour le déplacement du chariot de guidage (7) sont disposés latéralement sur le support roulant (9) et comportent des soufflets (21) de protection contre le salissement.

Vorderansicht

Fig. 1

Draufsicht

Fig. 2

EP 0 291 876 B1

Stellung „TIEF"

Fig. 3

Stellung „HOCH"

Fig. 4